# EUROPEAN PATENT APPLICATION

(11) **EP 2 129 010 A1**
(43) Date of publication of application: **02.12.2009**
(21) Application number: 08703397.3
(22) Date of filing: 17.01.2008
(51) Int. Cl.: H04B 7/26, H04L 12/56, H04Q 7/38

(54) **SYSTEM AND METHOD FOR REPORTING SELECTION SERVICE IN MULTIMEDIA BROADCAST MULTICAST SERVICE**

(30) Priority: 19.01.2007 JP 2007010350
(71) Applicant: NEC Corporation, Minato-ku Tokyo 108-8001 (JP)
(72) Inventor: KUBOTA, Keiichi, Minato-ku Tokyo 108-8001 (JP)
(74) Representative: Glawe, Ulrich
(86) International application number: PCT/JP2008/050542
(87) International publication number: WO 2008/088024

(57) **Abstract**

The present invention aims to reduce the likelihood of congestion occurrence and allow performing appropriate radio resource management at the session start of an MBMS broadcast service, and provides a system of notifying a selected service in a Multimedia Broadcast Multicast Service standardized in 3GPP; the system comprises: a mobile device which, when MBMS Selected Services information of interest is available, provides notification of the MBMS Selected Services information; and a radio network controller which, upon receipt of the MBMS Selected Services information from the mobile device, stores and utilizes the same for radio resource management of a concerned MBMS Service.

## Description

### Technical Field

The present invention relates to the Multimedia Broadcast Multicast Service (MBMS) standardized in the 3GPP, and particularly to a system and method of providing notification of a selected service.

### Background Art

In the Multimedia Broadcast Multicast Service defined in Non-Patent Document 1 (3GPP Technical Specification TS25.331 version 6.12.0 Radio Resource Control (RRC): Protocol specification) and Non-Patent Document 2 (3GPP Technical Specification TS25.346 version 6.9.1 Introduction of the Multimedia Broadcast/Multicast Service (MBMS) in the Radio Access Network (RAN): Stage 2 3GPP), an operation in which a mobile device notifies a radio network controller of MBMS Selected Services information is specified. In this specification, the mobile device is supposed to generate and notify MBMS Selected Services information exclusively for the services which are notified by the radio network controller through an MBMS Common Control Channel (hereafter referred to as MCCH).

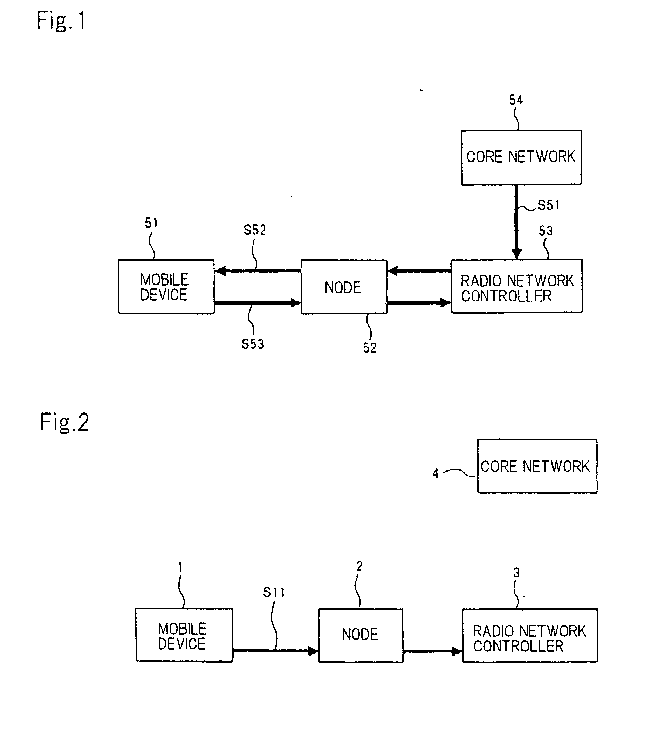

Figure 1 shows a procedure by which mobile device 51 notifies radio network controller 53 of MBMS Selected Services information; hereafter, the procedure will be described with reference to Figure 1.
1. Radio network controller 53 receives MBMS Session Start request S51 from core network 54;
2. Radio network controller 53 provide notification of MBMS service session information S52 to mobile device 51, via node 52 (Node-B); and
3. Based on notified MBMS service session information S52, mobile device 51 gives a notice that the notified MBMS Service is the MBMS Service selected by mobile device 51, as MBMS Selected Services information S53 to radio network controller 53 via node 52. At radio network controller 53, the management of radio resource is performed based on MBMS Selected Services information S53.

It is noted that MBMS Selected Services information S53 refers to a list of MBMS Services, concerning which notification has to be made to UTRAN when the list of MBMS services are selected by mobile device 51 (hereafter, referred to as MBMS Enhanced Broadcast Service) from the MBMS Service available in the MBMS Broadcast mode in which mobile device 51 is interested.
Non-Patent Document 1: 3GPP Technical Specification TS25.331 version 6.12.0 Radio Resource Control (RRC): Protocol specification.
Non-Patent Document 2: 3GPP Technical Specification TS25.346 version 6.9.1 Introduction of the Multimedia Broadcast/Multicast Service (MBMS) in the Radio Access Network (RAN): Stage 2.

### Disclosure of the Invention

### Problems to be Solved by the Invention

The scheme shown in Figure 1 has the following problems.

1. Because no information is available on the number and the distribution condition of the terminals which have selected the concerned service immediately after an MBMS Session Start for MBMS Enhanced Broadcast Service is demanded by core network 54, radio network controller 53 cannot perform an optimized radio resource management (for example, selection of an appropriate Bearer type) for starting data transmission. It is after the service receiving terminal has been notified of the concerned service by MCCH, and after having been informed by the service receiving terminal that the concerned service is a selected service, that radio network controller 53 can perform radio resource management depending on the number and the distribution condition of mobile devices which have selected the concerned service. This may cause a delay in the transmission of service data and force a tentative transmission of service data by way of the radio resource which is not in accordance with the condition of mobile device 51, in the implementation of radio network controller 53.

2. Mobile devices which have selected the same MBMS Enhanced Broadcast Service try in unison to transmit MBMS Selected Services information to radio network controller 53 when the MBMS Enhanced Broadcast Service thereof starts being notified through the MCCH. Because of that, it is highly likely that congestion occurs in the Uplink when the transmission of service data is started.

The present invention has been made in view of the above described problems, and its object is to realize a system and method of notifying a selected service in Multimedia Broadcast Multicast Service, which reduces the likelihood of congestion occurrence and which allows performing an appropriate radio resource management at the session start of an MBMS broadcast service.

### Means for Solving the Problems

The present invention is **characterized in that** in the Multimedia Broadcast Multicast Service standardized in 3GPP, it allows by configuring a mobile device to notify to a radio network controller at an earlier stage than in related arts broadcast service (MBMS Selected Services) information, which the mobile device desires to receive, starting the transmission of data for the concerned broadcast service, and performing appropriate radio resource management in a shorter time than in related arts without causing congestion of the Uplink due to a start of service; the system according to the present invention is as follows.

The present invention is a system of providing notification of a selected service in Multimedia Broadcast Multicast Service standardized in 3GPP, the system comprises:
a mobile device which, when MBMS Selected Services information of interest is available, provides notification of the MBMS Selected Services information; and
a radio network controller which, upon receipt of the MBMS Selected Services information from the mobile device, stores and utilizes the same for radio resource management of a concerned MBMS Service.

The present invention solves the above described problems by omitting the above described procedure 1: " receiving an MBMS Session Start request from a core network," and procedure 2: "The radio network controller notifying the mobile device of session service information" and arranging that after the upper layer of the mobile device determines a service to be selected in MBMS, the mobile device notifies the MBMS Selected Services information to the radio network controller.

The present invention is configured as described above and will achieve the effects as described below.

The first effect is that since the mobile device has provided notification of the MBMS service which the mobile device has selected in advance, the radio network controller can appropriately perform radio resource management immediately after the start of service session.

The second effect is that since the timing of providing notification of the service which each mobile device has selected is distributed, congestion of the Uplink at the start of a service can be prevented.

### Brief Description of the Drawings

Figure 1 shows a procedure to provide notification of MBMS Selected Services information;
Figure 2 is a block diagram to show the configuration of an exemplary embodiment;
Figure 3 is a sequence diagram to show the notification operation of MBMS Selected Services information at mobile device 1 of the exemplary embodiment shown in Figure 2;
Figure 4 is a sequence diagram to show the modified notification operation of MBMS Selected Services information at mobile device 1 of the exemplary embodiment shown in Figure 2;
Figure 5 is a block diagram to show the configuration of an exemplary embodiment;
Figure 6 is a sequence diagram to show the operation of a further exemplary embodiment;
Figure 7 is a sequence diagram to show the operation of a further exemplary embodiment;
Figure 8 is a sequence diagram to show the operation of a further exemplary embodiment; and
Figure 9 is a sequence diagram to show the operation of a further exemplary embodiment.

### Description of Symbols

- 1: Mobile device
- 2: Node
- 3: Radio network controller
- 4: Core network

### Best Mode for Carrying Out the Invention

Next, exemplary embodiments will be described with reference to the drawings.

### Exemplary embodiment 1

Figure 2 is a block diagram to show the configuration of an exemplary embodiment. The present exemplary embodiment is made up of mobile device 1, node (Node-B) 2, radio network controller 3, and core network 4.

Mobile device 1 of the present exemplary embodiment provides notification of MEMS Selected Services information S11 to radio network controller 3 via node 2 without waiting for Session information notification of MBMS service from radio network controller 3. As a result, the timing at which each mobile device provides notification of MBMS Selected Services information is determined independent of the MBMS Session Start, thus there is no cause to worry about the congestion of the Uplink to core network 4 even when a large number of mobile devices have selected the same MBMS Enhanced Broadcast Service.

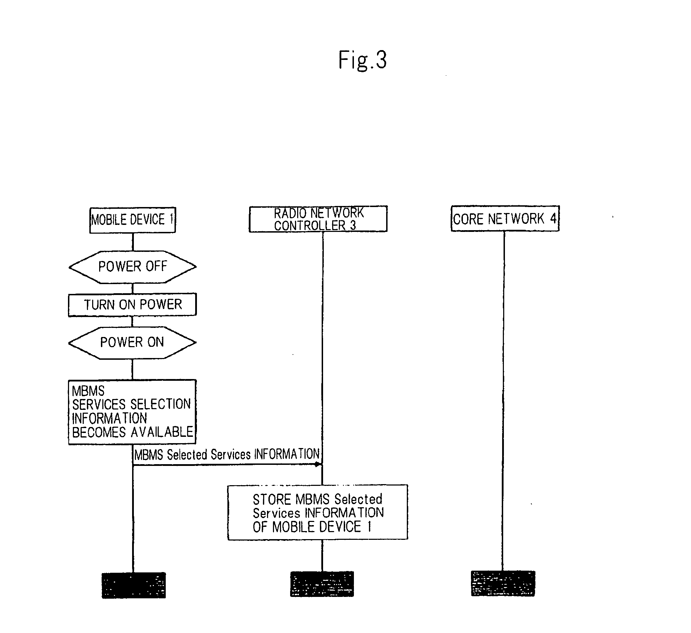

Figure 3 is a sequence diagram to show the notification operation of MBMS Selected Services information of mobile device 1.

When a user of mobile device 1 turns on the power, mobile device 1 confirms whether MBMS Services selection (MBMS Selected Services) information of interest is available. When MBMS Services selection information of interest becomes available, mobile device 1 provides notification of the MBMS Selected Services information to radio network controller 3. Radio network controller 3 stores the received MBMS Selected Services information to use the same for radio resource management of a concerned MBMS Service.

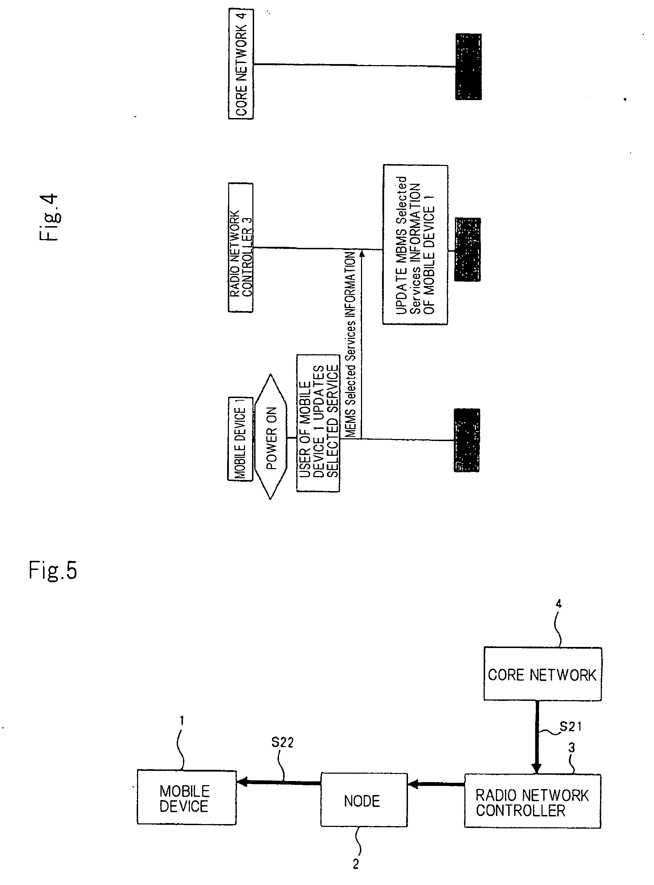

Figure 4 is a sequence diagram to show the modified notification operation of MBMS Selected Services information of mobile device 1.

After the user of mobile device 1 makes a modification of a MBMS service which has been selected, mobile device 1 immediately provides notification of the updated MBMS Selected Services information to radio network controller 3. Radio network controller 3 newly stores the received MBMS Selected Services information to utilize the same for radio resource management of a concerned MBMS Service.

As shown in Figures 3 and 4, since both the notification of MBMS Selected Services information and the modified notification of MBMS Selected Services information are to be performed independently of the MBMS Session Start, these notifications will not cause congestion in the Uplink.

Figure 5 is a block diagram to show the information notification operation of the present exemplary embodiment when starting an MBMS Service Session after the sequence shown in Figure 3 or 4 has been performed.

Radio network controller 3 performs radio resource management for the MBMS Service Session immediately after receiving an MBMS Session Start request.

Upon receipt of MBMS Session Start request S21 from core network 4, radio network controller 3 provides notification of MBMS service session information S12 to mobile device 1 via node 2. At this moment, based on the MEMS Selected Services information for which mobile device 1 has provided advance notification, it becomes possible to perform radio resource management (for example, selection of an optimum bearer type) depending on the number and distribution state of mobile devices which have selected the Session of the MBMS Service that has started.

In the present exemplary embodiment, it is possible to replace node 2 and radio network controller 3 in Figures 1 and 4 with an apparatus in which a node and a radio resource controller are integrated.

It is noted that node 2 (Node-B) in Figures 2 and 5 is well known to those skilled in the art and is not directly related to the present invention, therefore a detailed configuration thereof is therefore omitted.

### Exemplary embodiment 2

Another exemplary embodiment will be described. Although the basic configuration of the present exemplary embodiment is similar to that of exemplary embodiment 1, a further improvement is made in radio network controller's 3 handling of support of the MBMS function information.

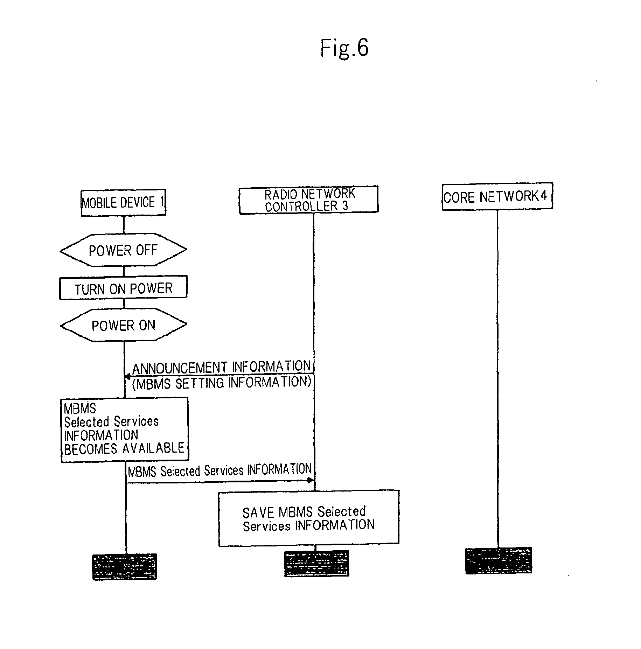

Figure 6 is a sequence diagram to show the operation of the present exemplary embodiment. In the present exemplary embodiment, as shown in Figure 6, when receiving announcement information from radio network controller 3 such as information defined as System information in 3GPP Technical Specification TS25.331 version 6.12.0 Radio Resource Control (RRC): Protocol specification, mobile device 1 confirms whether radio network controller 3 (network side) supports the MBMS function, and provides notification of MBMS Selected Services information to radio network controller 3 only when the support is provided.

Having received the MBMS Selected Services information from mobile device 1, radio network controller 3 saves the information.

Similarly, after mobile device has moved between radio network controller 3, mobile device 1 confirms the state that the latest radio network controller 3 support the MBMS function, and which performs control of mobile device 1, in order to determine whether or not to send MBMS Select Services information.

In the present exemplary embodiment, radio network controller 3 may provide notification to mobile device 1 that it supports the MEMS function information by using another information transfer scheme other than announcement information. For example, the configuration may be arranged such that radio network controller 3 provide notification to mobile device 1 of the fact that it supports MBMS by using a RRC DCCH message or a RRC CCCH message which is defined in the above described Technical Specification, confirms whether radio network controller 3 (network side) supports a MBMS function, and provides notification to radio network controller 3 of MBMS Selected Services information only when the support is provided.

Here, a RRC DCCH message refers to, for example, RADIO BEARER SETUP, RADIO BEARER RELEASE, RADIO BEARER RECONFIGURATION, TRANSPORT CHANNEL RECONFIGURATION, PHYSICAL CHANNEL RECONFIGURATION, ACTIVE SET UPDATE, or CELL UPDATE CONFIRM message, etc. Further, a RRC CCCH message refers to, for example, RRC CONNECTION SETUP or CELL UPDATE CONFIRM-CCCH message, etc.

In the present exemplary embodiment, the MBMS function support information notified by a RRC DCCH message or a RRC CCCH message may be adapted to provide notification of MBMS function support information for every Radio Link or Cell.

Determining the operation of a mobile device by receiving MBMS function information using a RRC DCCH message or a RRC CCCH message in the present exemplary embodiment is made implementable by describing the following operation shown in Subclause 8.7.6.2 of Technical Specification TS25.331 of the 3GPP.
A UE entering CELL_DCH shall initiate the MBMS modification request procedure in the following cases:
1> if the UE has any MBMS Selected Service; and
1> if one of the radio links in the active set indicates the MBMS capable cell.
A UE completing an RRC Connection Setup procedure and entering CELL_DCH shall initiate the MBMS modification request procedure in the following cases:
1> if the UE has any MBMS Selected Service; and
1> if one of the radio links in the active set indicates the MBMS capable cell.
In the present exemplary embodiment, since the mobile device confirms the state that the radio network controller supports the MBMS function, a radio network controller which does not support the MBMS function will not receive needless information, making it possible to achieve the effect of preventing the occurrence of congestion.

### Exemplary embodiment 3

A further exemplary embodiment will be described. Although the basic configuration of the present exemplary embodiment is similar to that of exemplary embodiment 1, an improvement is made in the handling of MBMS Selected Services information when mobile device 1 moves between RATs (Radio Access Technology).

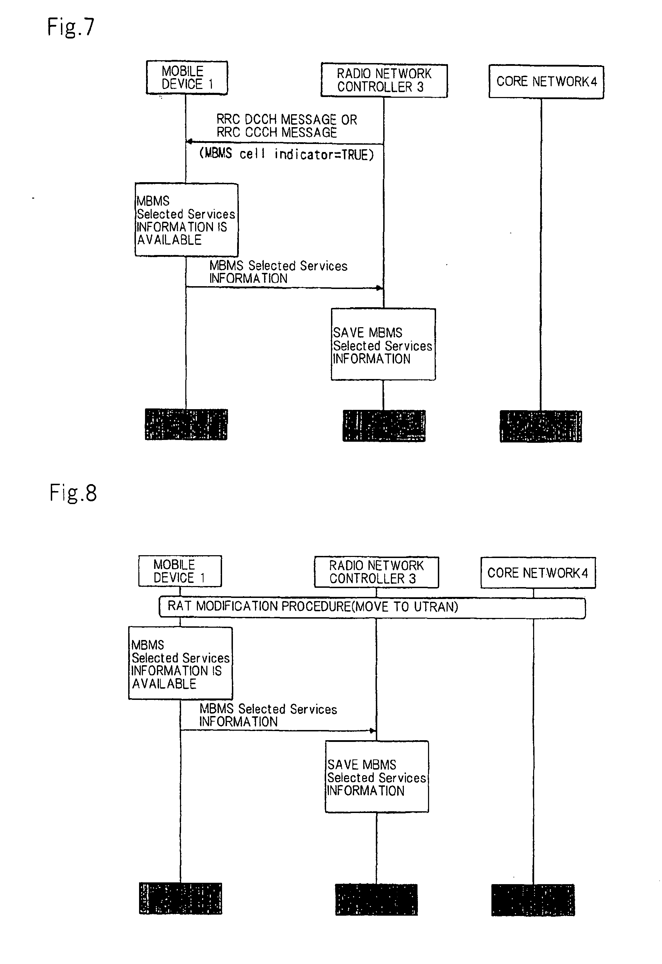

Figure 8 is a sequence diagram to show the operation of the present exemplary embodiment. In the present exemplary embodiment, as shown in Figure 8, after succeeding in the procedure based on a RAT modification request (for example, inter RAT handover to UTRAN, handover from GERAN lu mode, etc. specified in the 3GPP) from radio network controller 3, mobile device 1 provides notification of MBMS Selected Services information to radio network controller 3 which is performing control of mobile device 1.

The present exemplary embodiment is made implementable by describing the following operation in Subclause 8.7.6.2 of Technical Specification TS25.331 of the 3GPP.

A UE completing an inter RAT handover to UTRAN or handover from GERAN lu mode procedure shall initiate the MBMS modification request procedure in the following case:
1> if the UE has any MBMS Selected Service
In the present exemplary embodiment, configuration may be such that the network side provides notification to mobile device 1 that it supports MBMS, by using a HANDOVER TO URTRAN COMMAND message or a RADIO BEARER RECONFIGURATION message specified by the 3GPP TS25.331 during a RAT modification procedure, and mobile device 1 provides notification of MBMS Selected Services information only when the network side provides the support. In that case, the configuration is made implementable by describing the following operation in Subclause 8.7.6.2 of Technical Specification TS25.331 of the 3GPP.

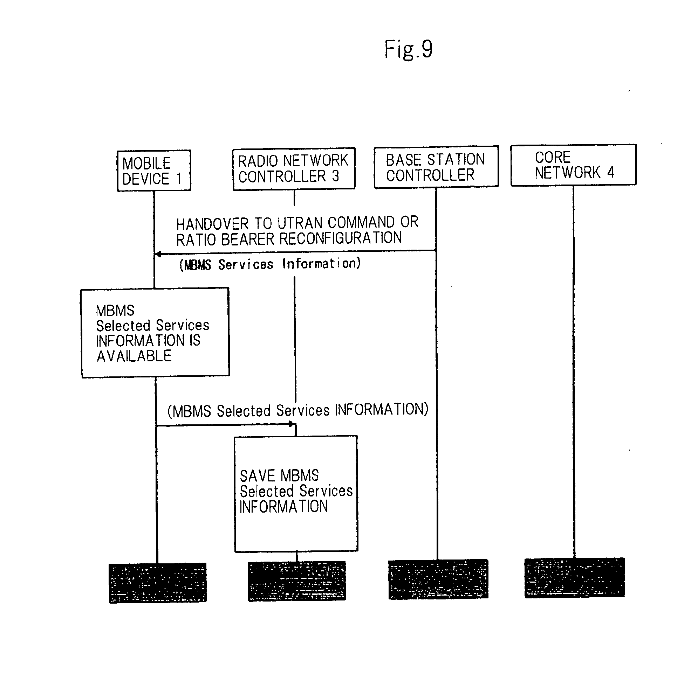

A UE completing an inter RAT handover to UTRAN or handover from GERAN lu mode procedure shall initiate the MBMS modification request procedure in the following cases:
1> if the UE has any MBMS Selected Service; and
1> one of the radio links in the active set indicates that the cell is MBMS capable cell.
In the present exemplary embodiment, a configuration may be arranged such that notification of support of the MBMS function support information to every radio Link or Cell, which is done by a HANDOVER TO UTRAN COMMAND message or a RADIO BEARER RECONFIGURATION message, is transmitted. Alternatively, as shown in Figure 9, a HANDOVER TO UTRAN COMMAND message or a RADIO BEARER RECONFIGURATION message is used to provide notification to the mobile device that the radio network controller, along with the identifier of the MBMS Service, which has been started in the radio network controller, supports the MBMS function information. In that case, it is made implementable by describing the following operation in Subclauses 8.2.2.3a and 8.3.6.3 of Technical Specification TS25.331 of the 3GPP.
1> if the IE "MBMS Services information" is present; and
1> if the UE has any MBMS Selected Service:
2> initiate MBMS modification request procedure as specified in subclause 8.6.7.2.
In the present exemplary embodiment, as described above, as the result of the mobile device notifying MBMS Selected Services information to the radio network controller immediately after a modification of RAT, it becomes possible to achieve the effect in which the radio network controller can perform radio resource management based on the latest information.

So far, although the present invention has been described with reference to exemplary embodiments, the present invention will not be limited to the above described exemplary embodiments. The configuration and details of the present invention are subject to various modifications, which are understandable to those skilled in the art, within the scope of the present invention.

This application claims preference of Japanese Patent Application No. 2007-010350 filed on Jan 19, 2007, disclosure of which is incorporated herein in its entirety.

## Claims

1. A system of providing notification of a selected service in a Multimedia Broadcast Multicast Service standardized in 3GPP, said system comprising:
a mobile device which, when MBMS Selected Services information of interest is available, provides notification of the MBMS Selected Services information; and
a radio network controller which, upon receipt of the MBMS Selected Services information from said mobile device, stores and utilizes the same for radio resource management of a concerned MBMS Service.

2. The system of notifying a selected service in Multimedia Broadcast Multicast Service according to claim 1, wherein
a mobile device confirms whether MBMS Selected Services information is available when power is turned on.

3. A system of providing notification of a selected service in Multimedia Broadcast Multicast Service standardized in 3GPP, said system comprising:
a mobile device which, after having modified an MBMS service to be selected, provides notification of MBMS Selected Services information of the modified service; and
a radio network controller which, upon receipt of the MBMS Selected Services information from said mobile device, stores and utilizes the same for radio resource management of a concerned MBMS Service.

4. A system of providing notification of a selected service in Multimedia Broadcast Multicast Service standardized in 3GPP, said system comprising:
a radio network controller which provides notification of announcement information for setting MBMS service; and
a mobile device which, upon receipt of said announcement information and when MBMS Selected Services information of interest is available, provides notification of the MBMS Selected Services information, wherein
said radio network controller, upon receipt of the MBMS Selected Services information from said mobile device, stores and utilizes the same for radio resource management of a concerned MBMS Service.

5. A system of providing notification of a selected service in a Multimedia Broadcast Multicast Service standardized in 3GPP, said system comprising:
a radio network controller which provides notification that it supports MBMS services, by using a RRC DCCH message, a RRC CCCH message, or a Handover To UTRAN Command message; and
a mobile device which, upon receipt of said RRC DCCH message, RRC CCCH message, or Handover To UTRAN Command message, and when MBMS Selected Services information is available, provides notification of the MBMS Selected Services information.

6. A system of providing notification of a selected service in a Multimedia Broadcast Multicast Service standardized in 3GPP, said system comprising:
a radio network controller which provides notification that it supports MBMS services, by using a RRC DCCH message, a RRC CCCH message, or a Handover To UTRAN Command message; and
a mobile device which, upon receipt of said RRC DCCH message, RRC CCCH message, or Handover To UTRAN Command message, and when MBMS Selected Services information is available, provides notification of the MBMS Selected Services information, wherein
said radio network controller which, upon receipt of the MBMS Selected Services information from said mobile device, stores and utilizes the same for radio resource management of a concerned MBMS Service.

7. A system of providing notification of a selected service in Multimedia Broadcast Multicast Service standardized in 3GPP, said system comprising:
a mobile device which, after a procedure based on a RAT modification request (for example, inter RAT handover to UTRAN, handover from GERAN lu mode, etc. specified in the 3GPP) has succeeded and when MBMS Selected Services information of interest is available, provides notification of the MBMS Selected Services information.

8. A system of providing notification of a selected service in a Multimedia Broadcast Multicast Service standardized in 3GPP, said system comprising:
a mobile device which, after a procedure based on a RAT modification request (for example, inter RAT handover to UTRAN, handover from GERAN lu mode, etc. specified in the 3GPP) has succeeded and when MBMS Selected Services information of interest is available, provides notification of the MBMS Selected Services information; and
a radio network controller which, upon receipt of the MBMS Selected Services information from said mobile device, stores and utilizes the same for radio resource management of a concerned MBMS Service.

9. A method of providing notification of a selected service in a Multimedia Broadcast Multicast Service standardized in 3GPP, said method comprising:
a mobile device, when MBMS Selected Services information is available, providing notification of the MBMS Selected Services information; and
a radio network controller, upon receipt of the MBMS Selected Services information from said mobile device, storing and utilizing the same for radio resource management of a concerned MBMS Service.

10. A method of providing notification of a selected service in a Multimedia Broadcast Multicast Service standardized in 3GPP, said system comprising:
a mobile device, when MBMS Selected Services information is available, providing notification of the MBMS Selected Services information without waiting for a Session information notification of MBMS Service from a radio network controller.

11. A method of providing notification of a selected service in a Multimedia Broadcast Multicast Service standardized in 3GPP, said system comprising:
a mobile device providing notification of a selected service in Multimedia Broadcast Multicast Service in which, when MBMS Selected Services information is available, notification of the MBMS Selected Services information is made without waiting for a Session information notification of MBMS Service from a radio network controller; and
a radio network controller, upon receipt of the MBMS Selected Services information from said mobile device, storing and utilizing the same for radio resource management of a concerned MBMS Service.

12. A method of providing notification of a selected service in a Multimedia Broadcast Multicast Service standardized in 3GPP, said method comprising:
a mobile device, when MBMS Selected Services information is available, providing notification of the MBMS Selected Services information without waiting for a Session information notification of MBMS Service from a radio network controller.

13. A method of providing notification of a selected service in a Multimedia Broadcast Multicast Service standardized in 3GPP, said method comprising:
a mobile device providing notification of a selected service in a Multimedia Broadcast Multicast Service in which, when MBMS Selected Services information is available, notification of the MBMS Selected Services information is made without waiting for a Session information notification of MBMS Service from a radio network controller; and
a radio network controller, upon receipt of the MBMS Selected Services information from said mobile device, storing and utilizing the same for radio resource management of a concerned MBMS Service.
